# EUROPÄISCHE PATENTSCHRIFT

(11) **EP 0 995 580 B1**
(45) Veröffentlichungstag und Bekanntmachung des Hinweises auf die Patenterteilung: **23.04.2003**
(21) Anmeldenummer: 99890296.9
(22) Anmeldetag: 15.09.1999
(51) Int. Cl.: B29C 47/08, F16H 1/22, B30B 11/24

(54) **Getriebe zum Antreiben der Schnecken eines Zweischneckenextruders**
Transmission for twin screw extruders
Transmission pour extrudeuse à deux vis

(30) Priorität: 09.10.1998 AT 169098
(43) Veröffentlichungstag der Anmeldung: 26.04.2000
(73) Patentinhaber: E. Eisenbeiss Söhne Maschinen- und Präzisionszahnräderfabrik GmbH, 4040 Linz (AT)
(72) Erfinder: Hahn, Karl Ing., 4482 Ennsdorf (AT)
(74) Vertreter: Hübscher, Helmut, Dipl.-Ing.

(56) Entgegenhaltungen:
- AT-B- 351 235
- DE-A- 2 360 373
- US-A- 4 682 510
- US-A- 4 899 620

## Beschreibung

Die Erfindung bezieht sich auf ein Getriebe zum Antreiben der Schnecken eines Zweischneckenextruders mit zwei parallelen, unterschiedlich langen und gegensinnig drehenden Abtriebswellen, von denen die kürzere ein Antriebszahnrad trägt, das mit je einem Zahnrad zweier Verteilerwellen kämmt, die durch eine Zwischenwelle von der längeren Abtriebswelle her über Zahnräder antreibbar sind.

Um die hohen Drehmomente zum Antrieb der Schneckenwellen eines Zweischneckenextruders trotz des vorgegebenen, vergleichsweise kleinen Abstandes zwischen den Schneckenwellen übertragen zu können, ist es bekannt (AT 398 938 B); ein Getriebe mit zwei ungleich langen Abtriebswellen einzusetzen, von denen die kürzere ein Antriebszahnrad trägt, das mit einem Zahnrad der längeren Abtriebswelle kämmt. Zusätzlich steht das Antriebszahnrad der kürzeren Abtriebswelle mit einem Zahnrad einer parallelen Zwischenwelle im Eingriff, die gemeinsam mit der längeren Abtriebswelle von einer Antriebswelle her angetrieben wird. Da somit das Antriebszahnrad der kürzeren Abtriebswelle über zwei Zahnräder angetrieben wird, braucht über diese Zahnräder jeweils nur das halbe Drehmoment auf die kürzere Abtriebswelle übertragen zu werden, was entsprechend kleinere Verzahnungskräfte zur Folge hat. Wegen der Anordnung des Antriebszahnrades der kürzeren Abtriebswelle und der beiden mit diesem Antriebszahnrad kämmenden Zahnräder in einer gemeinsamen Axialebene bleiben außerdem die Biegebelastungen der kürzeren Antriebswelle gering, was sich vorteilhaft auf das gegenüber Schrägstellungen sehr empfindliche Tandemlager der kürzeren Abtriebswelle auswirkt. Nachteilig bei diesem bekannten Getriebe ist allerdings, daß über die längere Abtriebswelle nicht nur das Drehmoment für die angeschlossene Schneckenwelle, sondern auch das halbe Drehmoment für die kürzere Abtriebswelle übertragen werden muß, also ein Drehmoment, das dem Dreiviertelfachen des insgesamt aufzubringenden Drehmomentes entspricht, wenn die beiden Schneckenwellen des Extruders mit gleichem Drehmoment angetrieben werden sollen. Der dadurch bedingte größere Durchmesser der längeren Abtriebswelle vermindert den ohnehin begrenzten Abstand zwischen den beiden Abtriebswellen, so daß sich eine konstruktiv bedingte Begrenzung der übertragbaren Drehmomente ergibt, weil eben das für die kürzere Abtriebswelle ausreichend zu dimensionierende Tandemlager zwischen den beiden Abtriebswellen Platz finden muß.

Damit die längere Abtriebswelle lediglich das für die angeschlossene Schnekkenwelle erforderliche Drehmoment zu übertragen hat, ist es außerdem bekannt (AT 351 235 B), das Antriebszahnrad der kürzeren Abtriebswelle nicht über ein Zahnrad auf der längeren Abtriebswelle, sondern nur über zwei Verteilerwellen anzutreiben, die über je ein Zahnrad mit dem Antriebszahnrad der kürzeren Abtriebswelle kämmen. Der Antrieb dieser beiden Verteilerwellen erfolgt über eine Zwischenwelle, die über ein Zahnradpaar mit der längeren Abtriebswelle in Antriebsverbindung steht. Da die beiden Zahnräder der Verteilerwellen nicht in einer gemeinsamen Axialebene mit dem von ihnen angetriebenen Antriebszahnrad der kürzeren Abtriebswelle liegen können, heben sich die eingriffsbedingten Querkräfte nur zum Teil auf, so daß die kürzere Antriebswelle einer entsprechenden Biegebelastung ausgesetzt wird, die wiederum zu einer konstruktionsbedingten Begrenzung der übertragbaren Drehmomente aufgrund der damit verbundenen größeren Belastung des Tandemlagers führt. Die mit einem solchen Getriebe mögliche Steigerung der übertragbaren Drehmomente wird außerdem durch den Nachteil erkauft, daß die beiden Abtriebswellen abtriebsseitig nicht mehr antriebsverbunden sind, so daß sich ein unterschiedliches Torsionsverhalten der längeren Abtriebswelle und der Verteilerwellen störend bemerkbar macht, da die anzutreibenden Extruderschnecken in Folge unterschiedlicher Torsion der Abtriebswellen ihre axiale Lage zueinander verändern. Diese axiale Lageveränderung führt zu unterschiedlichen Flankenspielen der Extruderschnecken, was sich ungünstig auf den Extrusionsprozeß auswirkt. Im Extremfall könnten sogar die Flanken der Extruderschnecken zusammenlaufen, so daß die Extruderschnecken zerstört werden.

Der Erfindung liegt somit die Aufgabe zugrunde, ein Getriebe zum Antreiben der Schnecken eines Zweischneckenextruders so auszugestalten, daß trotz des vorgegebenen Axialabstandes der beiden Abtriebswellen eine Steigerung des insgesamt übertragbaren Drehmomentes möglich wird, ohne das Tandemlager für die kürzere Abtriebswelle zu gefährden.

Ausgehend von einem Getriebe der eingangs geschilderten Art löst die Erfindung die gestellte Aufgabe dadurch, daß auf der längeren Abtriebswelle in an sich bekannter Weise ein mit dem Antriebszahnrad der kürzeren Abtriebswelle kämmendes Zahnrad sitzt.

Da zur Folge dieser Maßnahme das Antriebszahnrad der kürzeren Abtriebswelle über drei Zahnräder angetrieben wird, nämlich das Zahnrad der längeren Abtriebswelle und die beiden Zahnräder der Verteilerwellen, braucht über die einzelnen Zahnräder lediglich etwa ein Drittel des auf die kürzere Abtriebswelle zu übertragenden Drehmomentes aufgebracht zu werden, was nicht nur eine Verringerung der Zahnbelastung des Antriebszahnrades der kürzeren Abtriebswelle mit sich bringt, sondern auch eine weitgehende Aufhebung der Querkräfte erlaubt, weil die mit dem Antriebszahnrad der kürzeren Abtriebswelle kämmenden Zahnräder entsprechend über den Umfang des Antriebszahnrades verteilt vorgesehen werden können. Dies bedeutet, daß das Tandemlager für die kürzere Abtriebswelle zufolge der weitgehend wegfallenden Biegebelastung der kürzeren Abtriebswelle vergleichsweise klein ausfallen kann. Obwohl die längere Abtriebswelle mit einem Drehmoment beaufschlagt wird, das etwa dem Zweidrittelfachen des gesamten, auf beide Schneckenwellen zu übertragenden Drehmomentes entspricht, und daher größer als für die Übertragung des für eine Schneckenwelle benötigten Drehmomentes auszubilden ist, kann gegenüber den bekannten Getrieben für einen Zweischneckenextruder eine merkliche Leistungssteigerung erzielt werden, und zwar bei vergleichbaren Getriebeabmessungen. Wird die mögliche Steigerung des übertragbaren Drehmomentes nicht ausgenützt, so kann durch die erfindungsgemäße Getriebeausbildung eine entsprechende Verlängerung der Lebensdauer erzielt werden.

Wird der Antrieb der kürzeren Abtriebswelle nicht über zwei, sondern über drei Verteilerwellen vorgenommen, so verringert sich das einerseits von der längeren Abtriebswelle und anderseits von den drei Verteilerwellen zu übertragende Drehmoment auf ein Viertel des Antriebsdrehmomentes der angeschlossenen Schneckenwelle, was eine Verringerung des von der längeren Abtriebswelle zu übertragenden Drehmomentes mit sich bringt, so daß die Einbauverhältnisse für das Tandemlager der kürzeren Abtriebswelle zusätzlich verbessert werden können.

Aufgrund der zusätzlichen Antriebsverbindung des Antriebszahnrades der kürzeren Abtriebswelle mit dem Zahnrad der längeren Abtriebswelle ergeben sich große Vorteile für die gleichbleibende Winkelstellung der beiden Abtriebswellen zueinander. Da die beiden Abtriebswellen in einer gemeinsamen Teilungsebene des Getriebeghäuses liegen, können diese vergleichsweise einfach montiert werden.

In der Zeichnung ist der Erfindungsgegenstand beispielsweise dargestellt. Es zeigen
- Fig. 1: ein erfindungsgemäßes Getriebe zum Antreiben der Schnecken eines Zweischneckenxtruders in einer schematischen Draufsicht,
- Fig. 2: einen Schnitt nach der Linie II-II der Fig. 1,
- Fig. 3: einen Schnitt nach der Linie III-III der Fig. 1 und
- Fig. 4: einen Schnitt nach der Linie IV-IV der Fig. 1.

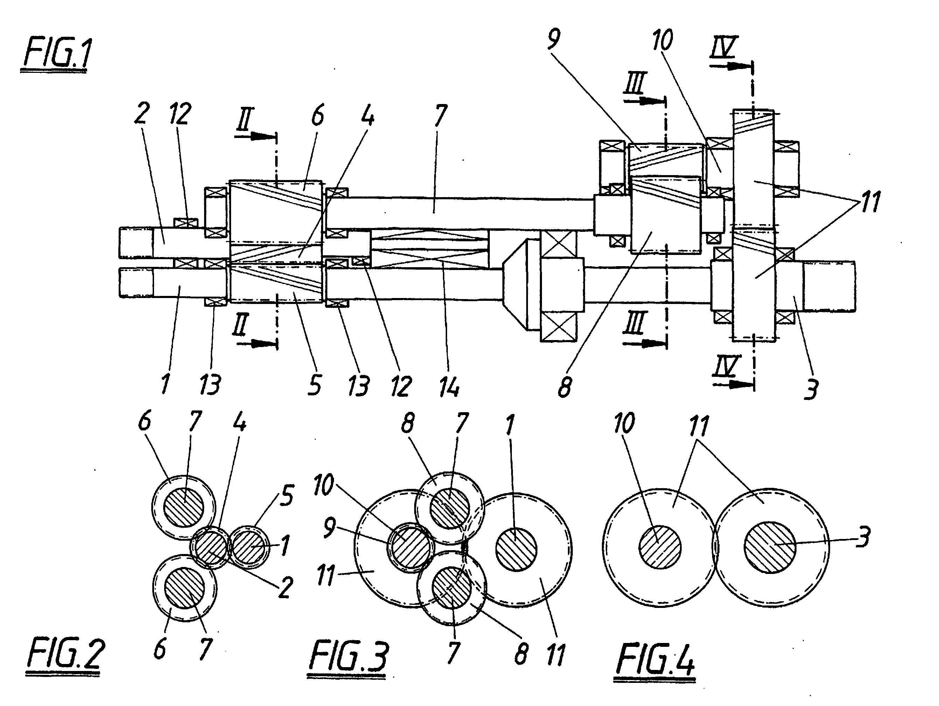

Das dargestellte Getriebe weist zwei Abtriebswellen 1 und 2 zum Antreiben der Schnecken eines nicht dargestellten Zweischneckenextruders auf. Während die längere Abtriebswelle 1 über einen Wellenstummel 3 auf der Getriebeeingangsseite unmittelbar angetrieben werden kann, erfolgt der Antrieb der kürzeren Abtriebswelle 2 über ein Antriebszahnrad 4, das einerseits mit einem Zahnrad der längeren Abtriebswelle 1 und anderseits mit zwei Zahnrädern 6 zweier Verteilerwellen 7 kämmt, wie dies insbesondere der Fig. 2 entnommen werden kann. Die Verteilerwellen 7 tragen am antriebsseitigen Ende je ein Zahnrad 8, die in ein gemeinsames Antriebszahnrad 9 auf einer Zwischenwelle 10 eingreifen. Die Zwischenwelle 10 wird vom Wellenstummel 3 her angetrieben wird, und zwar über ein Zahnradpaar 11, wie dies die Fig. 3 und 4 zeigen. Der Antrieb der beiden Abtriebswellen 1 und 2 über den Wellenstummel 3 bietet den Vorteil, daß dem Getriebe in einfacher Weise ein den jeweiligen Anforderungen angepaßtes Untersetzungsgetriebe herkömmlicher Bauart vorgeschaltet werden kann. Dadurch können die Ölhaushalte des Getriebes und des vorgeschalteten Untersetzungsgetriebes einfach getrennt werden. Aufgrund der unterschiedlichen Umfangsgeschwindigkeiten und Flankenpressungen der Verzahnungen kann es nämlich von Vorteil sein, das Getriebe mit einem Öl höherer Viskosität und das Untersetzungsgetriebe mit Öl einer niedrigeren Viskosität zu betreiben.

Die Drehmomentübertragung auf das Antriebszahnrad 4 der kürzeren Abtriebswelle 2 über drei Zahnräder 5 und 6 erlaubt eine weitgehend symmetrische Krafteinleitung in das Antriebszahnrad 4, so daß sich die wirksamen Querkräfte nach außen weitgehend aufheben. Die damit verbundene geringe Biegebelastung der kürzeren Abtriebswelle 2 ermöglicht einen größeren axialen Abstand der Wellenlager 12, die demnach gegenüber den Wellenlagern 13 der längeren Abtriebswelle 1 axial versetzt angeordnet werden können. Außerdem braucht bei der Auslegung des Tandemlagers 14 für die kürzere Abtriebswelle 2 keine Durchbiegung dieser Abtriebswelle 2 berücksichtigt zu werden, so daß trotz des vorgegebenen engen Abstandes der beiden Abtriebswellen 1 und 2 das Tandemlager 14 ausreichend dimensioniert werden kann. Da über die Zahnräder 5 und 6 jeweils ein Sechstel des auf den Wellenstummel 3 aufgebrachten Drehmomentes auf das Antriebszahnrad 4 der kürzeren Antriebswelle 2 zu übertragen ist, muß ein Drittel des auf den Wellenstummel 3 einwirkenden Drehmomentes über das Zahnradpaar 11 auf die Zwischenwelle 10 übertragen werden, von der das übertragene Drehmoment auf die beiden Verteilerwellen 7 aufgeteilt wird, während vom Wellenstummel 3 zwei Drittel des gesamten Drehmomentes über die Abtriebswelle 1 bis zum Zahnrad 5 übertragen werden muß, um nach einer Abgabe eines Sechstel des Gesamtdrehmomentes an das Antriebszahnrad 4 der kürzeren Abtriebswelle 2 die halbe Antriebsleistung am Abtriebsstummel der längeren Abtriebswelle 1 zur Verfügung zu haben. Diese Aufteilung der zu übertragenden Drehmomente auf die Wellen 1 und 7 erfolgt über eine genaue Durchmesserabstimmung dieser auf Torsion beanspruchten Wellen.

Wie der Zeichnung entnommen werden kann, kann durch eine horizontale Teilungsebene des nicht dargestellten Getriebegehäuses durch die beiden Abtriebswellen 1 und 2 eine vergleichsweise einfache Montage des Getriebes sichergestellt werden. In diesem Fall brauchen lediglich die Verteilerwellen 7 in axialer Richtung in das Gehäuse eingesetzt zu werden. Die auf den Verteilerwellen 7 sitzenden Zahnräder, vorzugsweise die Zahnräder 8, werden in ihrer Drehlage über Ölpreßverbände genau eingestellt, um Flankenspiele in den einzelnen Verzahnungsstufen und Kupplungsverbindungen auszuschalten, was die Voraussetzung für eine genaue Drehmomentaufteilung darstellt.

## Patentansprüche

1. Getriebe zum Antreiben der Schnecken eines Zweischneckenextruders mit zwei parallelen, unterschiedlich langen und gegensinnig drehenden Abtriebswellen (1, 2), von denen die kürzere ein Antriebszahnrad (4) trägt, das mit je einem Zahnrad (6) zweier Verteilerwellen (7) kämmt, die durch eine Zwischenwelle (10) von der längeren Abtriebswelle (1) her über Zahnräder (11) antreibbar sind, **dadurch gekennzeichnet, daß** auf der längeren Abtriebswelle (1) in an sich bekannter Weise ein mit dem Antriebszahnrad (4) der kürzeren Abtriebswelle (2) kämmendes Zahnrad (5) sitzt.

2. Getriebe nach Anspruch 1, **dadurch gekennzeichnet, daß** neben den zwei Verteilerwellen (7) eine weitere Verteilerwelle für den Antrieb des Antriebszahnrades (4) der kürzeren Abtriebswelle (2) vorgesehen ist.

3. Getriebe nach Anspruch 1 oder 2, **dadurch gekennzeichnet, daß** die beiden Abtriebswellen (1, 2) in einer gemeinsamen Teilungsebene des Getriebegehäuses liegen.

## Claims

1. A gear for driving the screws of a twin screw extruder with two parallel driven shafts (1, 2) of different lengths rotating in opposite directions, the shorter shaft bearing a drive gearwheel (4) which meshes with a gearwheel (6) on each of two distributor shafts (7) which are drivable by an intermediate shaft (10) from the longer driven shaft (1) via gearwheels (11), **characterised in that** a gearwheel (5) meshing with the drive gearwheel (4) of the shorter driven shaft (2) is mounted in manner known per se on the longer driven shaft (1).

2. A gear according to claim 1, **characterised in that** in addition to the two distributor shafts (7) another distributor shaft is provided for the drive of the drive gearwheel (4) of the shorter driven shaft (2).

3. A gear according to claim 1 or 2, **characterised in that** the two driven shafts (1, 2) are situated in a common dividing plane of the gearbox.

## Revendications

1. Transmission pour entraînement des vis d'une extrudeuse à deux vis, avec deux arbres menés (1, 2) parallèles, de longueurs différentes et tournant en sens inverse, dont le plus court porte une roue dentée d'entraînement (4), qui s'engrène avec chaque roue dentée (6) de deux arbres répartiteurs (7), susceptibles d'être entraînés, par l'intermédiaire de roues dentées (11), au moyen d'un arbre intermédiaire (10) depuis l'arbre mené (1) long, **caractérisée en ce qu'**une roue dentée (5), s'engrenant avec la roue dentée de l'entraînement (4) de l'arbre mené court (2), est montée, de manière connue en soi, sur l'arbre mené long (1).

2. Transmission selon la revendication 1, **caractérisée en ce que**, outre les deux arbres répartiteurs (7), est prévu un autre arbre répartiteur pour l'entraînement de la roue dentée d'entraînement (4) de l'arbre mené court (2).

3. Transmission selon la revendication 1 ou 2, **caractérisée en ce que** les deux arbres menés (1, 2) sont situés dans un plan de division commun du carter de transmission.
